(19) **Europäisches Patentamt / European Patent Office / Office européen des brevets**

(11) **EP 2 131 295 A2**

(12) # EUROPEAN PATENT APPLICATION

(43) Date of publication:
**09.12.2009 Bulletin 2009/50**

(51) Int Cl.:
***G06F 17/30*** *(2006.01)*

(21) Application number: **09162024.5**

(22) Date of filing: **05.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.06.2008  FI 20085559**

(71) Applicant: **Whitevector OY**
**00100 Helsinki (FI)**

(72) Inventors:
• **Muhonen, Juho**
**00250, Helsinki (FI)**
• **Makkonen, Juha**
**00100, Helsinki (FI)**
• **Susi, Petteri**
**00790, Helsinki (FI)**

(74) Representative: **Keinänen, Anu**
**Kolster Oy Ab**
**P.O.Box 148**
**(Iso Roobertinkatu 23)**
**00121 Helsinki (FI)**

(54) **Information system**

(57)   A device for rule-based classification of data items. The device is operatively connected to a database. It extracts a received data item into data blocks of one or more information elements, determines a functional purpose of a data block, records information on the determined functional purpose of the data block and sends the record to the database. The device finds for the data block a selector path that comprises a sequence of markup tags to which belong begin tags that are detected but for which the corresponding end tag is not detected before the data block. The rule repository comprises a rule that maps the selector path to a functional purpose of the data block. The method makes the extraction more robust and thus reduces the number of required computer operations, because several re-runs after manual correction operations are avoided.

## Fig. 4

**Description**

FIELD OF THE INVENTION

The present invention relates to information techniques and particularly to an information system that generates augmented data items on the basis of input data items.

BACKGROUND OF THE INVENTION

Internet is continuously expanding at an enormous rate. This sets a challenge to search engines that attempt to read the incoming data, index and provide a robust user interface for searching and retrieving various things. Internet is also heterogeneous: despite some widely acknowledged standards of data formats (HTML, XHTML) the level of their systematic and faithful adoption remains wanting.

A web page is valuable to the user only if it satisfies the user's information need. To this end, a search engine is typically designed to find pages, given a set of keywords that imply the information need. In order to enhance the search and retrieval operations on information received from web pages, a document may be refined by augmenting the document with further information. Augmented documents enable several important functions, for example, segmenting web pages into thematically coherent documents, assigning elements as headings, content or non-content, recognizing the publication dates or document types, removing non-relevant information, counting the number of comments, etc.

At refining, the information in the document is typically transformed into a more uniform format. This compresses the data as redundant or irrelevant parts are omitted. It also increases cohesion of the interpretation as parts (for example, forum or blog posts) may be segmented into individual documents. The removal of irrelevant parts also increases the effectiveness of search engines because only actual content becomes indexed and rates of accidental hits decrease. New fields (publish date, author) that are induced during refining accommodate more expressive searches. They also enable unified and informative user interface by, for instance, highlighting headings or other parts.

Considering the huge quantities of information, refining needs to be made automatically with an information system. Such a system extracts data blocks from a web page and classifies them according to the functional purpose of the data block in the document. Functional purpose in this context means that the document comprises information of various types and the types may be grouped according to a common functional denominator to classes. The classification means basically that the type of an analysed data block may be identified and the data block may be associated with other data blocks of the same type. After classification the content of the data block may be interpreted according to the same semantic framework as the other data blocks of the same type. The classification is typically made on a basis of a set of classification rules that provide a mapping between at least one characteristic of a data block and a functional purpose of the data block in the document.

The problem with conventional rule-based classification is that the mapping between data blocks and data block types is based on structural analysis (for example document object modelling, DOM) that is vulnerable to deficiencies and errors in the structural definitions in the document. However, web pages are generated by masses of different types of users for different type of uses, and by people with varying levels of coding skills. It is therefore likely that a considerable part of the available web pages are deficient and therefore do not easily lend themselves to such automatic rule-based classification. A lot of manual operations are needed to correct the errors in the analysed material and the documents need to be re-run more than once before an applicable result is achieved. This increases the amount of computer operations (storing, calculations) in the classification and degrades the throughput of the information system.

In addition, the rules are typically static or laboriously adjustable. With dynamically adjustable and accurate classification rules, the adaptability to different types of input materials would be achieved.

SUMMARY OF THE INVENTION

An object of the present invention is thus to provide a method and an apparatus for implementing the method so as to solve at least one of the above problems. The objects of the invention are achieved by a method and a device, which are characterized by what is stated in the independent claims. The preferred embodiments of the invention are disclosed in the dependent claims.

The invention is based on the idea of applying a selector path of successive tags before a data block to determine the augmentable data to be associated with the data block. This enables a more robust way to analyse the data items. Due to robustness the amount of corrective operations by the operator is decreased and less re-runs are needed when working on non-perfect data items. This reduces the number of computer operations and thereby improves the overall throughput of the device.

The invention provides several other advantages that are discussed with respective embodiments in the following description.

## BRIEF DESCRIPTION OF THE DRAWINGS

In the following the invention will be described in greater detail by means of preferred embodiments with reference to the attached [accompanying] drawings, in which

Figure 1 provides a functional description of the information system 100 according to the invention;
Figure 2 illustrates an operational environment of the embodied information system;
Figure 3 illustrates an exemplary hardware configuration for the implementation of the apparatus;
Figure 4 illustrates functional entities of the sourcing part of the embodied information system;
Figure 5 illustrates steps of en embodied procedure in the classification engine;
Figure 6 shows an exemplary context model;
Figure 7 provides a functional representation of the model applied in the information system;
Figure 8 shows an empty trellis before an initialization step of the classification algorithm;
Figure 9 shows the trellis after initialization;
Figure 10 shows the trellis after computing the first node of the second feature vector;
Figure 11 shows the situation after each probability for feature vector $x_2$ has been computed;
Figure 12 shows the final structure of the trellis;
Figure 13 shows the most probable backtrack;
Figure 14 provides a functional representation of the rule generator during rule induction;
Figure 15 illustrates steps of the first stage of the a two-staged procedure for generating a ruleset for a specific document context;
Figure 16 illustrates steps of the second stage of the a two-staged procedure for generating a ruleset for a specific document context.

## DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention relates to an information system that processes documents by augmenting them with document-specific information to enable fast and accurate search and/or retrieval procedures on the documents. A variety of system configurations applying a variety of information processing technologies may be used separately or in combinations to implement the embodiments of the invention. Information processing systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

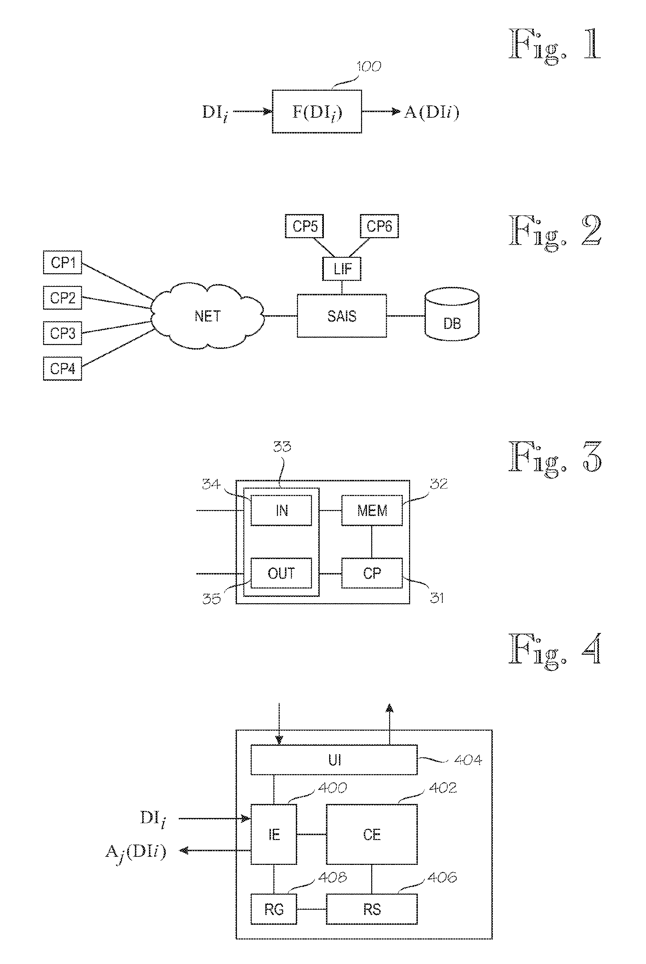

Figure 1 provides a functional description of the information system 100 according to the invention. In general the term information system relates to a combination of persons, data records and activities that automatically and manually process data and information in a given organization. In this context the information system relates more specifically to an information technologies component of a generic information system, and therefore refers to any telecommunications and/or computer related equipment or interconnected system or subsystems of equipment that may be used in the acquisition, storage, manipulation, management, movement, control, display, switching, interchange, transmission, or reception of information, and includes software, firmware, and/or hardware.

During its operation the information system 100 inputs a plurality of data items $DI_i$, performs a processing function $F(DI_i)$ and outputs a plurality of augmented data items $A_j(DI_i)$. A data item $DI_i$ refers to a block of information that is coded in electronic form to allow computer devices and computer software of the information system to convert, store, protect process, transmit, and securely retrieve it in the processes of the information system 100. A data item $DI_i$ is preferable a text file that comprises one or more information elements $ie_k$ that the information system is able to automatically detect and treat as separate parts of the data item. One or more information elements $ie_k$ may be comprised in a data block $db_k$ that the information system is also able to automatically detect and process as a separate entity. Automatically in this context means that the recognition and treatment functions may be performed with the software, firmware, and/or hardware of the information system without simultaneous support operations with the human mind.

The processing function $F(DI_i)$ of the information system 100 is configured to analyse an input data item $DI_i$ and on the basis of the analysis to generate an associated augmented data item $A_j(DI_i)$. The augmented data item comprises information determined on the basis of the input data item $DI_i$ according to one or more predefined analyses.

The analyses may comprise a technical analysis recording technical data, such as address of the source of the data item, routing information of the data item, size of the data item, time of creation of the data item, file format, etc. The analyses may also comprise content-based analysis recording contentual classification information associated with the data item, such as identification of the topic and language of the document, and identification of various different information types (heading, date, content, non-content) in the document. The analysis may be scoped to concern the whole data item, one or more data blocks of the data item, or one or more information elements of the data item.

The information system 100 is configured to compile the results from the analyses and include them into an augmented data item $A_j(DI_i)$ and output the augmented data item to a database, where it can be searched and retrieved for further analysis. An augmented data item $A_j(DI_i)$ is preferably the original data item $DI_i$ complemented with the results from the analyses in defined locations of the augmented data item $A_j(DI_i)$. For example, if the original data item is divided into data blocks, each data block may be augmented with result data concerning the data block, and the augmented data item may comprise the augmented text blocks in the same order they appear in the original data item. However, other formats may also be applied without deviating from the scope of protection. For example, the augmented data item may comprise the result data and only references to the original data item.

An essential content-based analysis of the information system is one where the content of the data item is extracted to data types, each of which represents one contentual class of information, for example, 'content', 'non-content', 'heading', 'date', etc. When dealing with structured data, the type of content may typically be readily derived by identifying the item of the structure carrying the data. When dealing with semi-structured data, most of the contentual type of information is not directly derivable.

HTML (hypertext markup language) is a markup language that defines a page layout of a web page, meaning, fonts, graphic elements, and hyperlinks, and is used here as an exemplary framework for semi-structured data processing. The basic structure for HTML markup is an element, and an element has two basic properties: attributes and content. Attributes and contents have certain restrictions that must be followed for an HTML document to be considered valid. An element usually has a start tag (for example, <element-name>) and an end tag (for example, </element-name>). The attributes of the element are typically contained in the start tag and content is located between the tags (e.g. <element-name attribute="value">Content<lelement-name>).

A structural markup describes the purpose of text. For example, <h2>Patents</h2> establishes "Patents" as a second-level heading. Structural markup does not denote any specific rendering, but most Web browsers have standardized on how elements should be formatted. Text may be further styled with Cascading Style Sheets (CSS). Presentational markup describes the appearance of the text, regardless of its function. For example <b>boldface</b> indicates that visual output devices should render "boldface" in bold text. Hypertext markup may be used to link parts of the document to other documents.

If HTML was used in a strictly controlled environment, one could assign a structural markup to all relevant points of interest applied in the extraction, and use these to extract any relevant data from the available documents. However, HTML is used in Internet by masses of different types of users for different type of uses, and by people with varying levels of coding skills. It is therefore clear that in real life the data material provided by HTML documents is so heterogeneous that purely structural approaches in classification cannot provide much applicable information.

In addition, due to the evolving nature of the Internet, there are more and more new sites created, new technologies taken into use and new document templates applied every day. There is no fixed or manually maintained set of rules that could be validly applied on a continuous basis to analyse the accumulating bulk of available documents in the Internet. On the other hand, it is also clearly seen that due to the evolving nature of the Internet, these masses of documents would provide a highly interesting and current material to a variety of information needs.

In an information system according to the present invention, the content-based analysis enables robust extraction of various types of information elements or data blocks from massive repositories where data items may have very heterogeneous structure and/or be quite incompletely or even erroneously structured. In the following, the information system according to the invention is illustrated in a larger system framework that includes a sourcing part of sourcing augmented data items and an applying part devoted to performing queries applying the augmented data items. It is, however possible to divide these parts into separate systems. As discussed above, the task of sourcing is to generate output augmented data items and output them to a dedicated database or to the applying part. The dedicated database may be a database of the sourcing part accessible to the applying part, a database of the applying part accessible to the sourcing part or an external database accessible to both the sourcing part and the applying part. In the following, an embodiment of an integrated system that comprises both the sourcing part and the application part is discussed in more detail.

Figure 2 illustrates an operational environment of the embodied information system comprising the functionality of the information system of Figure 1. As disclosed above, the information system receives data items from at least one data item source. In Figure 2, the information system IS is connected to a group of remote communication parties CP1, CP2, CP3, CP4 and a group of local communication parties CP5, CP6.

In order to communicate with the remote communication parties, IS is connected to a networked communication system that enables exchange of information between IS and its remote communication parties CP1, CP2, CP3, CP4. For exchange of information, IS and the remote communication parties CP1, CP2, CP3, CP4 comprise terminal devices that, together with software, applications, and content that are directly related to the devices, function within and are supported by a communication network NET.

The communication network NET typically comprises at least one or more core networks that provide network services, and one or more access networks through which various users may access these core network services. The core network refers herein to a transmission facility composed of networks, system equipment and infrastructures configured to provide connections between access networks and between service enablers and access networks. An access network represents herein an implementation of network entities and interfaces that provide required transport bearer capabilities for the provision of telecommunication services to terminal devices of the communication system. Terminal device represents herein a uniquely identifiable system entity that sources and sinks data streams of one or more defined protocol layers. The basic elements of communication systems are generally known to a person skilled in the art and will not be described in more detail herein.

In order to communicate with the local communication parties CP5, CP6, IS may be connected to, or comprise a local interface LIF via which it can exchange information with CP5, CP6. LIF may comprise a user interface through which users may access a limited set of functions of SAIS. LIF may also comprise some non-networked telecommunication access facilities that allow direct exchange of information between communicating devices CP5, CP6 and SAIS. Examples of such mechanisms comprise, for example, Bluetooth, Infrared Data Association (IrDA), Radio Frequency Identification (RFID), Digital Enhanced Cordless Telecommunications (DECT), Dedicated Short Range Communications (DSRC), HIPERLAN, HIPERMAN, Institute of Electrical and Electronics Engineers (IEEE) 802.11, Ultra-wideband (UWB), Institute of Electrical and Electronics Engineers (IEEE) 802.16 (WiMAX), xMax, ZigBee, Institute of Electrical and Electronics Engineers (IEEE) 802.16 (WPAN), Wireless USB.

For the output operations, IS is connected to a dedicated database system DB to which it can store information. For simplicity, Figure 2 shows the database system as one locally connected database DB. However, it is clear that a database DB may also be integrated in IS, or be made accessible to IS over the communication network NET. A database system including a combination of any of these different types of database elements may be applied without deviating from the scope of protection.

Some of the communication parties may be sources of information and provide data items to IS to be processed and stored. Some of the communication parties may be querying clients that retrieve information from the database system of IS. Some of the communication parties may act both as sources of information and querying clients.

The invention aims at improving the sourcing part of the information system such that the system may apply a wider range of materials, including documents that are of various type and even partly incomplete. In a conventional information system an incomplete or erroneous document causes an error indication. In most of the cases, the operator needs then to check the document, correct the coding and rerun the extraction procedure. In solutions according to the invention the extraction procedure is more robust, so most of the error situations and reruns after corrective measures are avoided. The invention thus improves the throughput of the information system by reducing the number of processing operations in the information system. In addition, when the sourced material is well structured and details the features of the data item, the search and retrieval operations become quicker and more efficient and the results from the search and retrieval operations become more valuable to the parties applying them.

It is noted that the search and retrieval mechanisms used in the applying part of the information system are not, as such, relevant to the present invention. A variety of conventional or new methods for data search and retrieval may be applied without deviating from the scope of protection. In the following, the discussion focuses mainly on the sourcing part of the embodied information system.

Figure 3 illustrates an exemplary hardware configuration for the implementation of the apparatus embodied as IS in Figure 2. The apparatus comprises a processing unit 31, a processor element that comprises an arithmetic logic module, a number of special registers and control circuits. The apparatus also comprises a memory unit 32, a data medium where computer-readable data or programs or user data can be stored. The memory means typically comprise memory modules that allow both reading and writing (RAM), and memory modules whose contents can only be read (ROM). The apparatus also comprises an interface unit 33 with input unit 34 for inputting data for internal processing in the apparatus, and output unit 35 for outputting data from the internal processes of the apparatus.

Examples of said input unit 34 in IS comprise plug-in units acting as a gateway for information delivered to its external connection points. For receiving information locally, the input unit 34 may also comprise a keypad, or a touch screen, a microphone, or the like. Examples of said output unit 35 in IS include one or more plug-in units feeding information to the lines connected to its external connection points. For outputting information locally, the output unit 35 may also comprise a screen, a touch screen, a loudspeaker, or the like.

The control unit 31, memory unit 32, and interface block 33 are electrically interconnected to perform systematic execution of operations on received and/or stored data according to predefined, essentially programmed processes of the apparatus. In solutions according to the embodiments of the invention, these operations comprise functions for implementing the functional entities, operations and interfaces of the information system described in Figures 4 to 15.

The units and blocks of the apparatus may be implemented as one or more integrated circuits, such as application-specific integrated circuits (ASIC). Other hardware embodiments are also feasible, such as a circuit built of separate logic components. A hybrid of these different may also be applied. All modifications and configurations required for implementing functionality of an embodiment may be performed as routines, which may be implemented as added or updated software routines, application circuits (ASIC) and/or programmable circuits. Software routines may be downloaded into the apparatus.

It should be noted that only elements necessary for disclosing the present embodiment are illustrated in Figure 3. For a person skilled in the art it is clear that information system apparatuses comprise a plurality of further elements and functionalities not explicitly illustrated herein. In addition, the blocks illustrate logical or functional units that may be implemented in or with one or more physical units, notwithstanding whether they are illustrated as one or more blocks in Figure 3.

The computer programs may be stored on a computer program distribution medium readable by a computer or a processor. The computer program medium may be, but is not limited to, an electric, a magnetic, an optical, an infrared or a semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

Figure 4 illustrates functional entities of the sourcing part of the embodied information system. The information system comprises an interface engine 400 that receives the data items input to the sourcing part and forwards them to the classification engine 402 for extraction of augmentable data. The interface engine also receives from the classification engine 402 the augmented data items and outputs them from the sourcing part. The information system comprises also a user interface 404 through which an operator of the information system may input information for the processes of the information system and may receive information from the processes of the information system. The classification engine 402 processes the data items according to a set of rules stored in a ruleset repository 406. The rules in the ruleset repository 406 are dynamically adjustable by means of a rule generator 408 that may acquire adjustment information through the user interface and/or through the input or output data items.

The user interface 404 and the interface engine 406 may be operated conventionally and their operation is generally known to a person skilled in the art. In the following, the operations of the classification engine 402, the rules repository 406 and the rule generator 408 of the embodied information system are described in more detail.

In the present embodiment it is assumed that an input data item is a text document that comprises data blocks of one or more information elements. The data blocks may be classified according to their functional purpose in the document. Different functional entities are referred herein as concepts. In this exemplary case, the documents are assumed to comprise text blocks that may belong to one of the following three concepts: TITLE, PUBLISH_DATE and CONTENT.

In HTML, a snippet of text inside a tag is called a text element. In terms of the present embodiment a text element inside the document corresponds to a data block $db_k$. The text element

`<html><body><p>This is text</p></body></html>`

comprises one text element 'This is text'. The text element is inside three different tags (html, body, p). The tag sequence (html, body, p) is called a selector path of the text element. In this embodiment, if one or more of the tags have class and/or id attributes, for example `<p id="p_id" class="p_class">`, associated with them, those attributes are considered part of the tag. This tag sequence is used as a basis for mapping the text element of the document into one of the concepts applied in the system. The rules of the ruleset repository comprise associations between selector paths and concepts, so the mapping may be implemented by comparing a determined selector path of a data block to the selector paths in the ruleset repository. A match may be determined on the basis of a matching function that provides a matching value for the similarity between the selector path and the selector path in the ruleset repository, and an associated condition, for example a threshold value, for the matching value. If the value of the matching function exceeds the threshold value, a match may be determined. In this embodiment the matching function corresponds to a partial sequential relation. For example, a sequence (p) matches with sequence (html, body, p). If a match is found, the text element is augmented with information of the corresponding concept. For example, the ruleset may comprise a rule

R1: (html, body, p)$\rightarrow$ CONTENT

that maps the determined selector path to the concept 'CONTENT'.

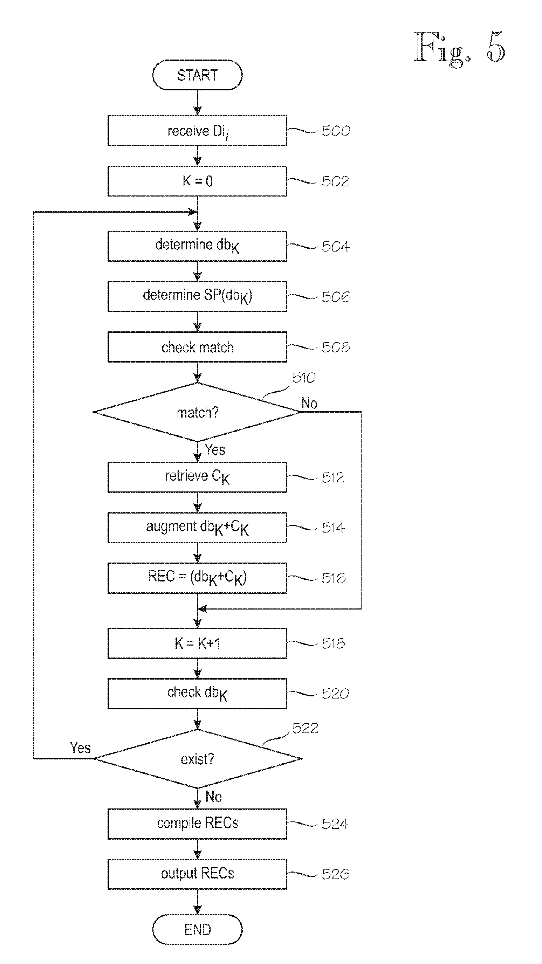

The embodied classification engine is configured to perform during its extraction operation a classification procedure that determines the type of a text element and uses the type as an extracted piece of information to be augmented to the text element. Figure 5 illustrates steps of this procedure in the classification engine of Figure 4. The procedure begins in a situation where the classification engine is switched on and operatively connected to the interface engine and the ruleset repository. When the classification engine receives (step 500) a document $DI_i$, it resets (step

502) a text element counter k. The classification engine reads through the document, determines (step 504) a next text element $db_k$ and determines (step 506) for the text element also the selector path $SP(db_k)$. The classification engine checks (step 508) from the ruleset repository whether a match is found between the selector path $SP(db_k)$ of the text element and a selector path of one or more rules. If (step 510) one or more matches are found, the classification engine retrieves (step 512) the corresponding concept from the most specific matching rule of the ruleset repository, augments (step 514) the text element with information on the corresponding concept and records (step 516) the augmented text element REC. If (step 510) a match is not found, the classification engine may perform some default operation, for example augment the text element with a default concept, alert a system operator on a mismatched text element, and/or generate an error message on the situation. Alternatively, the classification engine may move directly to the following step 518 where the text element counter is incremented in order to move to the next text element. The classification engine checks (step 520) whether a next text element exists. If (step 522) the next text element exists, the procedure returns to step 504 to determine the next text element and its corresponding selector path. If (step 522) no next text element exists, the classification engine compiles (step 524) the recorded augmented text elements and outputs (step 526) them to the dedicated database.

The advantage from using a selector path, i.e. a sequence of tags to classify the text element is that the analysis is not dependent on any structural analysis, as such. In addition, the very typical coding error where an end tag is missing does not disrupt the analysis. The method is therefore straightforward and robust. This reduces the number of error situations and re-runs due to the error situations, and therefore decreases the amount of computer operations necessary to achieve successful analyses. In addition, due to the use of tags, the intermediate results and error situations are easy to analyse because the tags and sequences of tags are legible and may thus be directly read by the operating personnel of the information system. This is in contrast with statistical classification methods where intermediate values and variables are very difficult to conceive and their analysis takes a lot of time and effort.

As discussed above, in the embodied information system the ruleset is not a fixed group of predefined rules but a dynamically adjustable mapping that adapts quickly to different document types. The adaptation is achieved by the use of rule generator, the operation of which is discussed in more detail in the following. The basic underlying idea of the rule generator is to combine the structure of the applied semi-structured scheme with typographical information applied on the analysed data and produce feature vectors that are expressive enough for the purposes of automatic pattern recognition. Data items may then be converted into a sequence of feature vectors that lend themselves to be automatically classified into concepts. Due to some level of internal dependency between the different elements, a context dependent classification is applied.

The rule generator operates with labelled training documents that it received via the interaction engine. It generates a context-based model and on the basis of this context-based model and one or more labelled training documents that are associated to one and same context, generates a ruleset applicable in that particular context. Accordingly, the rule generation process comprises three main stages:

- preprocessing, where documents associated to one and same context are transformed into sequences of vectors
- modelling, where a context-model representing the dependency of consecutive elements in the vector sequence is created
- rule induction, where an optimal set of selector paths is determined for concepts.

In the embodied system, we deal with HTML document where the HTML tag corresponds to a selector element. The selector element comprises a tag name, a class (HTML class attribute), and an identity (HTML id attribute). The selector element has an assigned specificity that depends on the three fields. Specificity may be determined by assigning the tag name, the class and predefined identity specificity values, for example value 1 for the tag name, value 10 for the class and value 100 for the identity. In this case the specificity of, for example, an element <div id="div1"> would be 1 + 100 = 101. It should be noted that these values may also be used to compute a level of match between two selector paths by adding together the specificity values of matching tags. For example using values 1, 10 and 100, the level of match between a path (d iv id="div1", p class="bold") and path (div id="div1", a, p class="bold") is (div + id="div1") + (p + class="bold") = (1 + 100) + (1 + 10) = 112. Furthermore, the selector path comprises a content pattern that imposes restrictions on the text content of the text element. Again this pattern may be used to alter the level of match between two paths.

Since HTML is a semi-structured format, each text element occurs in a path of selector elements. For example and element

<html><body><div>... <p>This is text</p>...</div></body></html> yields a path (html,body,div,...,p). A selector path comprises a sequence of selector elements that are extracted from the actual HTML path. The selector path has a specificity that corresponds to the sum of specificities of the selector elements. For example, a selector path (html,body, div,...,p) is more specific than a selector path (div,p). During preprocessing the labelled document is parsed to build these selector paths.

In the preprocessing phase the text data itself is not considered, but the text element is transformed into a vector of features. A feature is basically a measurable layout quality of the text element, for example the font-size associated to the text, the number of characters in the text element, the number of digits in the text element, etc. In statistical terms, the feature vector thus corresponds to an observation.

Let us assume that a labelled HTML document comprises N text elements. Then the HTML document can be expressed as a sequence of N observations $X : \bar{x}_1, \bar{x}_2, ... , \bar{x}N$, each of which corresponds to a HTML text element and is derived as a result of parsing the analysed document. Furthermore, let us assume that $\omega_i$, i=1,2,...,M are the target classes (or concepts) in which these vectors are to be classified. The classification assigns each vector a class and produces a sequence $\Omega_i$ $\omega_{i_1}$, $\omega_{i_2}$,...,$\omega_{iN}$ with $i_k \in$ 1,2,...,M for k=1,2,...,N. The total number of these class sequences $\Omega_i$ is $M^N$, i.e. the number of possible ordered combinations of M distinct objects taken in groups of N.

This means that the classification problem is transformed into finding the most likely class sequence $\Omega_i$ to which the generated vector sequence X corresponds.

In the following, the rule generation procedure is illustrated by means of a simplified example following the definitions of the present embodiment and applying three labelled training documents associated to the context. HTML documents often come with attached CSS documents. The CSS document may specify display properties of a text element, such as font size, boldness and position. The properties may be defined by stating the selector path and the identifiers (id and class attributes) of the selector path element. If the selector path and the identifiers apply, the browser uses the defined properties. Properties not defined in CSS document have typically some default values. Let us assume that in the exemplary training documents the default font size of a text element inside a <h1> is 30 and inside a <h2> is 24. For all other text elements the font size is 16 if not specified in a CSS-document. Let us also assume that the font of the text element is by default not bolded.

The first training document is as follows:

```
<html>
    <body>
        <h1> The title of document 1</h1>
        <p><b> 23.01.2008</p>
        <p> This is the example document 1.
        Lets assume that the documents
        1 through 3 are all blog postings.
        </p>
    </body>
</html>
```

The second training document is as follows:

```
<html>
    <body>
        <div class"title"> The title of document 2</div>
        <div><b> 24.01.2008</b></div>
        <div> This is the example document 2.
        The purpose of documents 2 and 3
        is to provide some variation to
        the selector paths introduced in
        document 1.
        </div>
    </body>
</html>
```

The third training document is as follows:

```
<html>
    <body>
        <h2> The title of document 31</h2>
        <div class="date"> 25.01.2008</div>
        <div> This is the example document 3. </div>
         <div>Its content is divided across </div>
        <div>different divs. </div>
    </body>
</html>
```

The CSS document for the second document is

```
di.v.title {
     font-size: 29px;
}
```

The CSS document for the third document is

```
div.title {
     font-size: bold;
}
```

It should be noted that the above documents are simplified examples aimed to illustrate the operations during the rule generation process. Attention is also drawn to the fact that the data in the training documents is not perfect: the fourth line of the first document contains no end tag that would match the boldness tag. For classification schemes relying on structural analysis such documents would not be applicable. In the embodied information system, such error does not cause an error situation and the document is applicable for analysis, as well as for a training document.

As discussed above, during preprocessing, the text elements are transformed into feature vectors. The features are metric, not language-dependent, which makes the solution language independent. The measurable features may vary according to the application. In the present embodiment, three features are used:

- text boldness (0=non-bold, 1 =bold)
- number of digits in the text element
- font size of the text element

The following table shows a summary of text elements in the training documents.

| | Text element | Selector path | Features |
|---|---|---|---|
| $t_{1,1}$ | "The title of document 1" | (html,body,h1) | (0,1,30) |
| $t_{1,2}$ | "23.01.2008" | (html,body,p,b) | (1,8,16) |
| $t_{1,3}$ | "This is...blog postings." | (html,body,p) | (0,3,16) |
| $t_{2,1}$ | "The title of document 2" | (html,body,div) | (0,1,29) |
| $t_{2,2}$ | "24.01.2008" | (html,body,div,b) | (1,8,16) |
| $t_{2,3}$ | "This is... document 1." | (html,body,p) | (0,4,16) |
| $t_{3,1}$ | "The title of document 3" | (html,body,h2) | (0,1,24) |
| $t_{3,2}$ | "25.01.2008" | (html,body,div) | (1,8,16) |
| $t_{3,3}$ | "This is... document 3." | (html,body,div) | (0,1,16) |
| $t_{3,4}$ | "Its... document across" | (html,body,div) | (0,1,16) |
| $t_{3,5}$ | "different divs" | (html,body,div) | (0,1,16) |

Since there was no CSS document to change the formatting of the first document, the three text element of the first document may be modeled with feature vectors (0,1,30), (1,8,16), (0,3,16). Feature vectors of text elements in the second and the third document may be determined using a CSS parser. CSS parsing is an operation generally known to a person skilled in the art and will not be described here in detail.

The selector paths of text elements may be determined by keeping track of open HTML tags. If an end tag is encountered, the track list of open tags is modified by removing all open tags to the first tags matching the encountered end tag. This eliminates the vulnerability to missing end tags.

After preprocessing, the information system creates a statistical context-based model that represents the dependency of consecutive elements in the vector sequence and provides a content model for concepts applied in the information system.

Given a sequence X of vectors, finding the most likely class sequence $\Omega_i$ means maximizing the probability $P(\Omega_i)$ and solving the corresponding $\Omega_i$.

By Bayes rule we get:

$$P(\Omega_i|X) = \frac{P(X|\Omega_i)\,P(\Omega_i)}{P(X)}$$

The probability P(X) is independent of $\Omega_i$, so in order to find the most likely class sequence, it suffices to solve:

$$\arg\max_{\Omega_i} P(X|\Omega_i)\,P(\Omega_i)$$

where $P(\Omega_i)$ is the apriori probability of sequence $\Omega_i$. Thus, it all boils down to finding the most probable class sequence, a sequence $\Omega_i$, for which it holds

$$P(\Omega_i|X) > P(\Omega_j|X), \forall i \neq j$$

which is equivalent to

$$P(X|\Omega_i)P(\Omega_i) > P(X|\Omega_j)P(\Omega_j), \forall i \neq j$$

Let us assume that all sequences are not equally probable and there are dependencies between the classes. A simple way to represent or to describe the dependencies between classes is called a Markov chain rule. Given a sequence $\Omega_i$: $\omega_{i1}$, $\omega_{i2}$, ..., $\omega_{iN}$ the chain rule states that

$$P\left(\omega_{i_k}|\omega_{i_{k-1}}, \omega_{i_{k-2}}, \ldots, \omega_{i_1}\right) = P\left(\omega_{i_k}|\omega_{i_{k-1}}\right)$$

This is called limited horizon: the probability of $\omega_{ik}$ depends only on the preceding element $\omega_{ik-1}$ and is therefore called a first-order Markov model. A first order Markov model comprises a MxM transition matrix A such that

$$a_{ij} = P(\omega_{k+1} = j|\omega_k = i), \forall i,j : 1 \leq i \leq M, 1 \leq j \leq M$$

and a M-vector of initial states $\pi$ such that

$$\pi_i = P(\omega_1 = i), \forall i : 1 \leq i \leq M$$

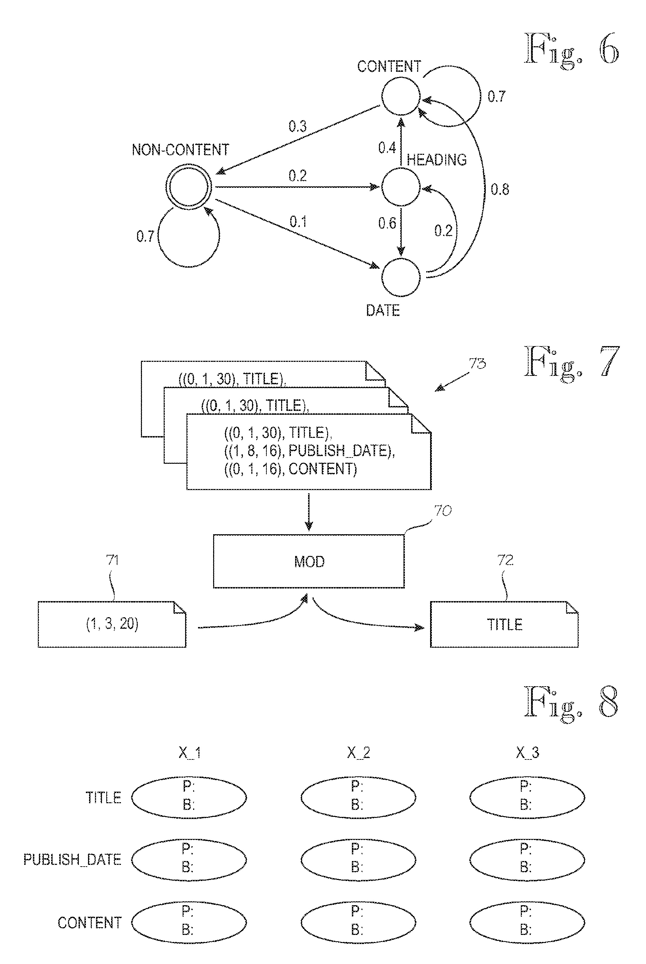

Figure 6 shows an exemplary context model that comprises four states. All sequences start in NON-CONTENT class and may remain there until a DATE or HEADING is found. CONTENT is not attained unless a heading is found. The out-bound transitions from any given states add up to one non-zero probability: $\pi$ (NON-CONTENT) =1.
A transition matrix representing the state-automation, like above, may be calculated from the data of the training documents. Now, the probability of a class sequence $\Omega_i$ is

$$P(\Omega_i) = P(\omega_{i_1}) \prod_{k=2}^{N} P(\omega_{i_k}|\omega_{i_{k-1}}),$$

where $P(\omega_{i_1})$ is the initial probability for class $\omega_{i_1}$ to occur. The classification problem transforms now to finding for a sequence of feature vectors $X: \bar{x}_1, \bar{x}_2, ..., \bar{x}_N$ classes $\Omega_i: \omega_{i_1}, \omega_{i_2}, ..., \omega_{i_N}$ such that the quantity

$$P(X|\Omega_i)P(\Omega_i) = P(\omega_{i_1})P(\bar{x}_1|\omega_{i_1}) \prod_{k=2}^{N} P(\omega_{i_k}|\omega_{i_{k-1}})P(\bar{x}_k|\omega_{i_k})$$

becomes maximum. The probabilities $P(\omega_{i_k}|\omega_{ik-1})$ are those of Markov model stored in a stochastic transition matrix, which means the classifier may be considered as a context-dependent classifier.

The probabilities $P(\bar{x}_k|\omega_{i_k})$ are the probabilities of vector $\bar{x}_k$ belonging to class $\omega_{i_k}$. In this case, these are modeled with Naïve Bayes, which assumes that the dimensions of the feature vector take values independent of each other. That is

$$P(\bar{x}_k|\omega_{i_k}) = \prod_{j=1}^{D} P(x_{k_j}|\omega_{i_{k-1}})$$

where D is the number of dimensions in vectors X. Again, these probabilities are calculated from the data in the training documents. The combination of Markov model and Naïve Bayes is hereinafter called as a Markov classifier. It should be noted, however, that any other modeling scheme able to produce the feature vector probabilities $P(\bar{x}_k|\omega_{i_k})$ may be applied with Markov model, without deviating from the scope of protection.

While there are $M^N$ possible class sequences, the computational cost of brute-force algorithms are not feasible. However, Viterbi algorithm provides a computational short-cut for finding the most probable sequence. The Viterbi algorithm finds the optimal path of states from an initial state (element 1) to the end (element N).

The task is to find the most likely path

$$\arg\max_{\Omega_i} P(\Omega_i|X)$$

which is the same as maximizing

$$\arg\max_{\Omega_i} P(X|\Omega_i)P(\Omega_i)$$

To this end, let us define

$$\delta_j(k) = \max_{(\omega_{i_1}, ..., \omega_{i_{k-1}})} P(\omega_{i_k} = \omega_j|(\bar{x}_1, ..., \bar{x}_{k-1}), (\omega_{i_1}, ..., \omega_{i_{k-1}}))$$

This variable stores for each point in the trellis the probability of the most probable path that leads to that node. The corresponding variable $\phi_j(k)$ then records the node of the incoming arc that led to this most probable path. Using dynamic programming, the most probable path through the whole trellis may be calculated as:

1. Initialization:

$$\delta_j(1) = P(w_j)P(\overline{x}_1|w_j), 1 \leq j \leq M$$

2. Induction:

$$\sigma_i(k+1) = \delta_i(k)P(\omega_j|\omega_i)P(\overline{x}_{k+1}|\omega_j)$$

Store probability:

$$\delta_j(k+1) = \max_{1 \leq i \leq M} \sigma_i(k+1), 1 \leq j \leq M$$

Store backtrace:

$$\phi_j(k+1) = \arg\max_{1 \leq i \leq M} \sigma_i(k+1), 1 \leq j \leq M$$

3. Termination and path readout by backtracking. The most likely state sequence is worked out from the right backwards, following the stored backtrace.

$$P(\Omega) = \max_{1 \leq i \leq M} \delta_i(N)$$

$$\hat{X}_N = \arg\max_{1 \leq i \leq M} \delta_i(N)$$

$$\hat{X}_k = \phi_{\hat{X}_{k+1}}(k+1)$$

Figure 7 provides a functional representation of the model MOD applied in the information system of the present invention. The model 70 has two main characteristics. It is configured to recognize how a particular concept applied in the system looks like in on the average, so when it receives a feature vector 71 it is able to map it to a concept 72. In addition, the model allows to be trained to a particular context with documents associated to that context. The documents provide training information 73 that comprises feature vectors and their corresponding concepts.

Referring to the earlier example, let us assume the text elements and their associated concepts in the training documents are:

|  | Text element | Features | Concept |
|---|---|---|---|
| $t_{1,1}$ | "The title of document 1" | (0,1,30) | TITLE |
| $t_{1,2}$ | "23.01.2008" | (1,8,16) | PUBLISH DATE |
| $t_{1,3}$ | "This is...blog postings." | (0,3,16) | CONTENT |

(continued)

| | Text element | Features | Concept |
|---|---|---|---|
| $t_{2,1}$ | "The title of document 2" | (0,1,29) | TITLE |
| $t_{2,2}$ | "24.01.2008" | (1,8,16) | PUBLISH DATE |
| $t_{2,3}$ | "This is... document 1." | (0,4,16) | CONTENT |
| $t_{3,1}$ | "The title of document 3" | (0,1,24) | TITLE |
| $t_{3,2}$ | "25.01.2008" | (1,8,16) | PUBLISH DATE |
| $t_{3,3}$ | "This is... document 3." | (0,1,16) | CONTENT |
| $t_{3,4}$ | "Its... document across" | (0,1,16) | CONTENT |
| $t_{3,5}$ | "different divs" | (0,1,16) | CONTENT |

Now, the effort is to build a Naive Bayes model and a Markov Model from this training data. It should be remembered that in case of Naive Bayes, which assumes that the dimensions of the feature vector take values independent of each other, it is possible to determine the probability of a feature vector x belonging to a given class $\omega$ from

$$P(\overline{x}|\omega) = \prod_{i=1}^{|\overline{x}|} P(x_i|\omega)$$

In order to build the model one needs to be able to determine the probabilities $P(x_i|\omega)$. Let us take for example the feature for boldness $\mathbf{x_1}$ with the concept PUBLISH_DATE. The training data contains a total of three feature vectors labeled as PUBLISH_DATE, all of which are bolded. This gives the probability P($\mathbf{x_1}$ = 1|PUBLISH DATE) = 3/3 = 1.0 and correspondingly P($x_1$ = 0|PUBLISH DATE) = 0/3 = 0.0. This leads to the table:

| Feature=value ($x_i$) | concept ($\omega$) | $P(x_i|\omega)$ |
|---|---|---|
| | | |
| $x_1 = 1$ | TITLE | 0/3 ≃ 0.01 |
| $x_1 = 0$ | TITLE | 3/3 ≃ 0.99 |
| $x_1 = 1$ | PUBLISH_DATE | 3/3 ≃ 0.99 |
| $x_1 + 0$ | PUBLISH_DATE | 0/3 ≃ 0.01 |
| $x_1 = 0$ | CONTENT | 0/5 ≃ 0.01 |
| $x_1 = 0$ | CONTENT | 5/5 ≃ 0.99 |
| $x_2 = 1$ | TITLE | 3/3 ≃ 0.97 |
| $x_2 = 3$ | TITLE | 0/3 ≃ 0.01 |
| $x_2 = 4$ | TITLE | 0/3 ≃ 0.01 |
| $x_2 = 8$ | TITLE | 0/3 ≃ 0.01 |
| $x_2 = 1$ | PUBLISH_DATE | 0/3 ≃ 0.01 |
| $x_2 = 3$ | PUBLISH_DATE | 0/3 ≃ 0.01 |
| $x_2 = 4$ | PUBLISH_DATE | 0/3 ≃ 0.01 |
| $x_2 = 8$ | PUBLISH_DATE | 3/3 ≃ 0.97 |
| $x_2 = 1$ | CONTENT | 3/5 ≃ 0.596 |
| $x_2 = 3$ | CONTENT | 1/5 ≃ 0.196 |
| $x_2 = 4$ | CONTENT | 1/5 ≃ 0.196 |
| $x_2 = 8$ | CONTENT | 0/5 ≃ 0.01 |
| $x_3 = 16$ | TITLE | 0/3 ≃ 0.01 |

(continued)

| Feature=value ($x_i$) | concept ($\omega$) | $P(x_i\|\omega)$ |
|---|---|---|
| $x_3$ = 24 | TITLE | 1/3 ≃ 0.33 |
| $x_3$ = 29 | TITLE | 1/3 ≃ 0.33 |
| $x_3$ = 30 | TITLE | 1/3 ≃ 0.33 |
| $x_3$ = 16 | PUBLISH_DATE | 3/3 ≃ 0.97 |
| $x_3$ = 24 | PUBLISH_DATE | 0/3 ≃ 0.01 |
| $x_3$ = 29 | PUBLISH_DATE | 0/3 ≃ 0.01 |
| $x_3$ = 30 | PUBLISH_DATE | 0/3 ≃ 0.01 |
| $x_3$ = 16 | CONTENT | 5/5 ≃ 0.97 |
| $x_3$ = 24 | CONTENT | 0/3 ≃ 0.01 |
| $x_3$ = 29 | CONTENT | 0/3 ≃ 0.01 |
| $x_3$ = 30 | CONTENT | 0/3 ≃ 0.01 |

It is noted that the Naive Bayes approach typically works well if the training data set is large enough to cover all possible feature/value pairs. In the simple test case, however, there are lots of missing feature/value pairs even though they may actually occur in the actual data we are classifying. For example, there are no intermediate values 2, 5, 6 and 7 for the number of digits in the text element feature. This can be compensated by distribution smoothing methods. For example value 3 could contribute not only to the value 3 but also to values 2 and 4 with given smoothing distribution. Kernel smoothing is an operation well known to a person skilled in the art and may be referred from, for example, from Wikipedia (http://en.wikipedia.org/wiki/Kernel smoothing). To overcome this obstacle in this example, it is assumed that any probability that the model predicts to be 0.0 is actually 0.01. When the Naïve Bayes model is derived from the training data, the task is to compute the class probabilities using that model.

Markov model is a model that describes how different concepts depend on each other. Let us recall that the Markov Model consist of M × M transition matrix A and an M vector of initial states π, where M is the number of concepts. The transition matrix indicates the probabilities of a concept coming after another concept.

$$a_{i,j} = P(\omega_{k+1} = j | \omega_k = i), \forall i, j : 1 \leq i \leq M, 1 \leq j \leq M$$

For example in the training data the concept PUBLISH DATE is always after the TITLE:

$$P(\omega_{k+1} = \text{PUBLISH DATE} | \omega_k = \text{T ITLE}) = 3/3 = 1.0$$

The full Markov transition table becomes:

| | TITLE | PUBLISH_DATE | CONTENT |
|---|---|---|---|
| TITLE | 0/3 ≃ 0.01 | 3/3 ≃ 0.98 | 0/3 ≃ 0.01 |
| PUBLISH_DATE | 0/3 ≃ 0.01 | 0/3 ≃ 0.01 | 3/3 ≃ 0.98 |
| CONTENT | 0/2 ≃ 0.01 | 0/2 ≃ 0.01 | 2/2 ≃ 0.98 |

and the initial vector:

| | $P(\omega_1)$ |
|---|---|
| TITLE | 3/3 ≃ 0.98 |
| PUBLISH_DATE | 0/3 ≃ 0.01 |
| CONTENT | 0/3 ≃ 0.01 |

The transition table is read so that on the column label there is the concept from which the transition starts ($\omega_k$) and the row tells the concept to which the transition ends ($\omega_{k+1}$).

It is noted that in the training data there are only two transitions from the concept CONTENT to the concept set, the other three are transitions to the end element. Again, the zero value is replaced with a small initial value, to avoid zero probabilities.

Let us assume that we have been given a following sequence of feature vectors and the task is find the most probable sequence of concepts corresponding to these vectors:

| vector | features |
|--------|----------|
| $\bar{x}_1$ | (0,3,29) |
| $\bar{x}_2$ | (1,4,30) |
| $\bar{x}_3$ | (0,4,16) |

The Viterbi algorithm can be most easily explained by showing a visual description of the algorithm. Figure 8 shows an empty trellis before an initialization step of the algorithm. On the topmost row there are three labels corresponding to our feature vectors. On the left there are the defined concepts TITLE, PUBLISH_DATE, CONTENT. The ellipses in the trellis depict nodes that store information during the computation. Each node corresponds to feature vector on top of the node belonging to the concept on the left of the node. Each node stores the probability (P) of reaching that node and the backtrace (B), that is, the node from which the node was reached.

The first step of the Viterbi-algorithm initializes the leftmost nodes. The initial probabilities are computed using the Bayes model and the initial vector of the Markov model. For example the probability of the node corresponding to the first feature vector belonging to the concept TITLE is computed from:

$$P(TITLE_1)P((0, 3, 29)|TITLE)$$
$$= 0.98 * (0.97 * 0.01 * 0.33) = 0.00313698$$

Similarly for concepts PUBLISH DATE and CONTENT we have:

$$P(PUBLISH\_DATE_1)P((0, 3, 29)|PUBLISH\_DATE)$$
$$= 0.01 * (0.01 * 0.01 * 0.01) = 0.00000001$$

and

$$P(CONTENT_1)P((0, 3, 29)|CONTENT )$$
$$= 0.01 * (0.99 * 0.196 * 0.01) = 0.000019404$$

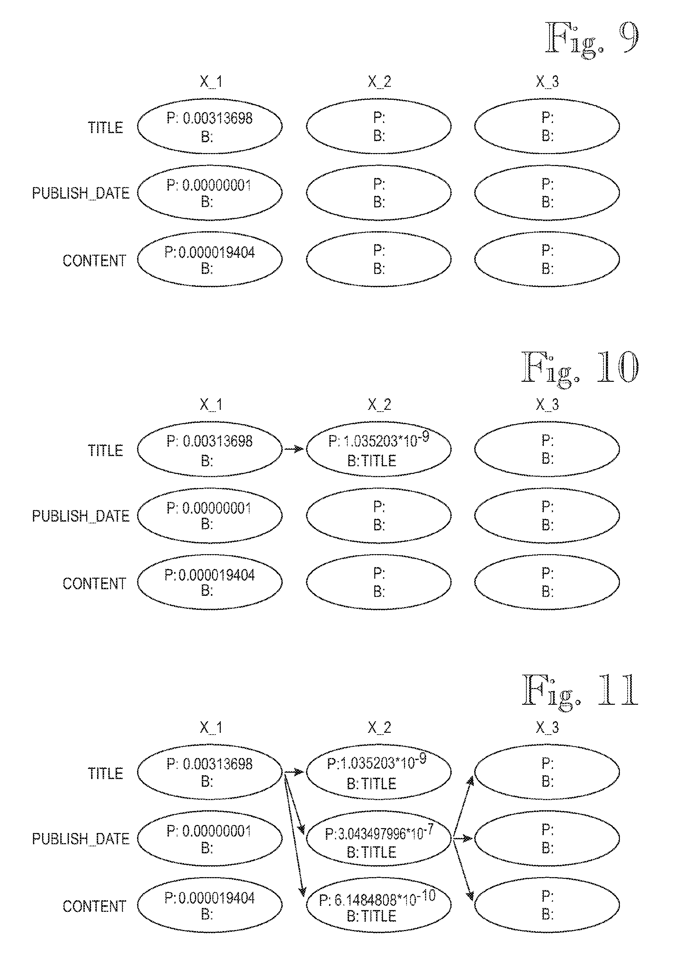

As we can see, the probabilities become very small, and in order to remedy this we use logarithms in actual computation (and summation instead of multiplication). The trellis after initialization is shown in Figure 9.

The next task is to compute the probabilities of the feature vector $\mathbf{x}_2$ being of each concept. Here, in addition to the Bayes model we use the transition matrix of the Markov model and the probabilities we computed during initialization, that is, the probabilities of feature vector $\mathbf{x}_1$. For example, the probability stored in the first node in the second column of the trellis that corresponds to feature vector $\mathbf{x}_2$ being of concept TITLE, and can be obtained by fetching the maximum of probabilities:

$$P(\mathbf{x}_1 = TITLE) * P(TITLE_2|TITLE_1) * P((1, 4, 30)|TITLE) = 0.00313698 * 0.01 * (0.01 * 0.01 * 0.33) = 1.035203 * 10^{-9}$$

$$P(x_1 = PUBLISH\_DATE)*P(TITLE_2|PUBLISH\_DATE_1)*P((1, 4, 30)|TITLE)$$
$$= 0.00000001 * 0.01 * (0.01 * 0.01 * 0.33) = 3.3 *10^{-15}$$

$$P(x_1 = CONTENT) * P(TITLE_2|CONTENT_1) * P((1, 4, 30)|TITLE)$$
$$= 0.000019404 * 0.01 * (0.01 * 0.01 * 0.33) = 6.403 * 10^{-12}$$

The maximum here is $1.035203 * 10^{-9}$. Choosing this node corresponds to choosing the concept TITLE to be the concept for $x_1$ in the case that the concept of $x_2$ is also title. This backlog information is stored in the node (B:).

The situation in the trellis is shown in Figure 10. The values of the remaining nodes of the trellis are computed in the same fashion, selecting the maximum probability for each node.

$$P(x_1 = TITLE)*P(PUBLISH\_DATE_2|TITLE1) *P((1, 4, 30)| PUBLISH\_DATE)$$
$$= 0.00313698 * 0.98 * (0.99 * 0.01 * 0.01) = 3.043497996 * 10^{-7}$$

$$P(x_1 = PUBLISH\_DATE)*P(PUBLISH\_DATE_2| PUBLISH\_DATE_1) *P((1, 4, 30)| PUBLISH\_DATE)$$
$$= 0.00000001 * 0.01 * (0.99 * 0.01 * 0.01) = 9.9 * 10^{-15}$$

$$P(x_1=CONTENT)*P(PUBLISH\_DATE_2|CONTENT_1)*P((1, 4, 30)|PUBLISH\_DATE)$$
$$= 0.000019404 * 0.01 * (0.99 *0.01 * 0.01) = 1.920996 * 10^{-11}$$

of which the maximum is $3.043497996 * 10^{-7}$.

$$P(x_1 = TITLE) * P(CONTENT_2| TITLE_1) * P((1, 4, 30)|CONTENT)$$

$$= 0.00313698 * 0.01 * (0.01 * 0.196 * 0.01) = 6.1484808 *10^{-10}$$

$$P(x_1=PUBLISH\_DATE)*P(CONTENT_2|PUBLISH\_DATE_1)*P((1,4, 30)|CONTENT)$$
$$= 0.00000001 * 0.98 * (0.01 * 0.196 * 0.01) = 1.9208 *10^{-13}$$

$$P(x_1 = CONTENT) \,*P(CONTENT_2|CONTENT_1) \,*P((1, 4, 30)|CONTENT)$$
$$= 0.000019404 * 0.98 * (0.01 * 0.196 * 0.01) = 3.72712032 * 10^{-10}$$

of which the maximum is $6.1484808*10^{-10}$.

Figure 11 shows the situation after each probability for feature vector $x_2$ has been computed. The final task is to compute the probabilities of the last feature vector $x_3$.

$$P(x_2 = TITLE) * P(TITLE_3| TITLE_2) * P((0, 4, 16)| TITLE)$$
$$= 1.035203 * 10^{-9} * 0.01 * (0.01 * 0.01 * 0.01) = 1.035203 * 10^{-17}$$

$$P(x_2 = PUBLISH\ DATE)*P(TITLE_3|PUBLISH\_DATE_2)*P((0, 4, 16)| TITLE)$$
$$= 3.043497996 * 10^{-7} * 0.01 * (0.01 * 0.01 * 0.01) = 3.043497996 * 10^{-15}$$

$$P(x_2 = CONTENT) * P(TITLE_3|CONTENT_2) * P((0, 4, 16)| TITLE)$$
$$= 6.1484808 * 10{-10} * 0.01 * (0.01 * 0.01 * 0.01) = 6.1484808 * 10^{-18}$$

Again, the maximum of which is $3.043497996 * 10^{-15}$.

$$P(x_2 = TITLE)*P(PUBLISH\_DATE_3| TITLE_2)*P((0, 4, 16)| PUBLISH\_DATE)$$
$$= 1.035203 * 10^{-9} * 0.98 * (0.01 * 0.01 * 0.97) = 9.840639718 * 10^{-14}$$

$$P(x_2 = PUBLISH\_DATE)*P(PUBLISH\_DATE_3| PUBLISH\_DATE_2)*P((0, 4, 16)| PUBLISH\_DATE)$$
$$= 3.043497996 * 10^{-7} * 0.01 * (0.01 * 0.01 * 0.97) = 2.95219 * 10^{-13}$$
$$P(x_2=CONTENT)*P(PUBLISH\_DATE_3|CONTENT_2)*P((0,4,16)|PUBLISH\_DATE)$$
$$= 6.1484808 * 10^{-10} * 0.01 * (0.01 * 0.01 * 0.97) = 5.964026376 * 10^{-16}$$

the maximum being $2.95219 * 10^{-13}$. Finally

$$P(x_2 = TITLE) * P(CONTENT_3| TITLE_2) * P((0, 4, 16)|CONTENT)$$
$$= 1.035203 * 10^{-9} * 0.01 * (0.99 * 0.196 * 0.97) = 1.94844 * 10^{-12}$$

$$P(x_2 = PUBLISH\_DATE) * P(CONTENT_3 | PUBLISH\_DATE_2) * P((0, 4, 16) | CONTENT)$$

$$= 3.043497996 * 10^{-7} * 0.98 * (0.99 * 0.196 * 0.97) = 5.61386 * 10^{-8}$$

$$P(x_2 = CONTENT) * P(CONTENT_3 | CONTENT_2) * P((0, 4, 16) | CONTENT)$$

$$= 6.1484808 * 10^{-10} * 0.98 * (0.99 * 0.196 * 0.97) = 1.13411^{-10}$$

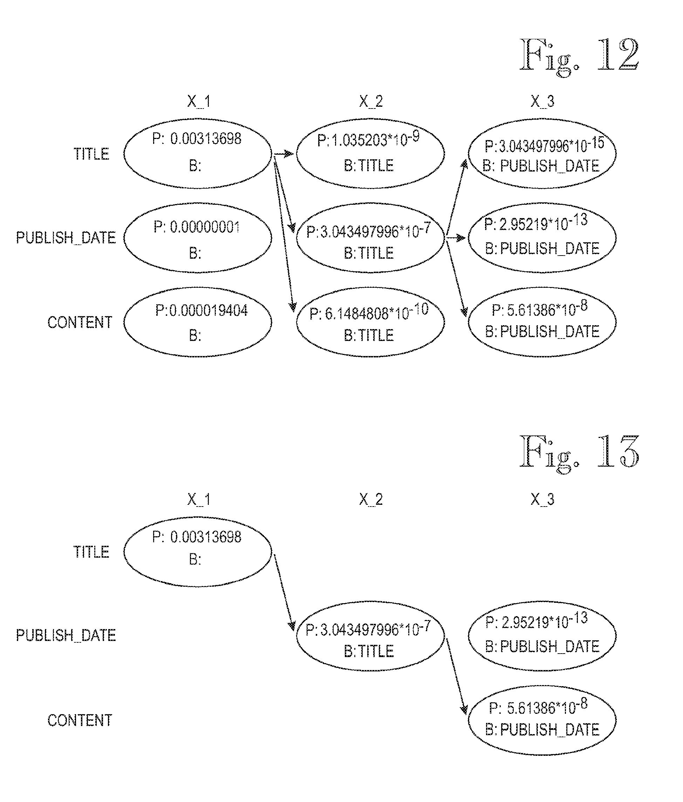

the maximum being $5.61386 * 10^{-8}$. The final structure of the trellis can now be seen in Figure 12.

What remains to be done is to find the most probable sequence. This can be done by selecting the node of feature vector $x_3$ that has the highest probability and then backtracking the computation by following the backtrace stored in B: as shown in Figure 13. The most probable concept sequence is: (TITLE, PUBLISH DATE, CONTENT) and the classifier classifies the feature vectors accordingly.

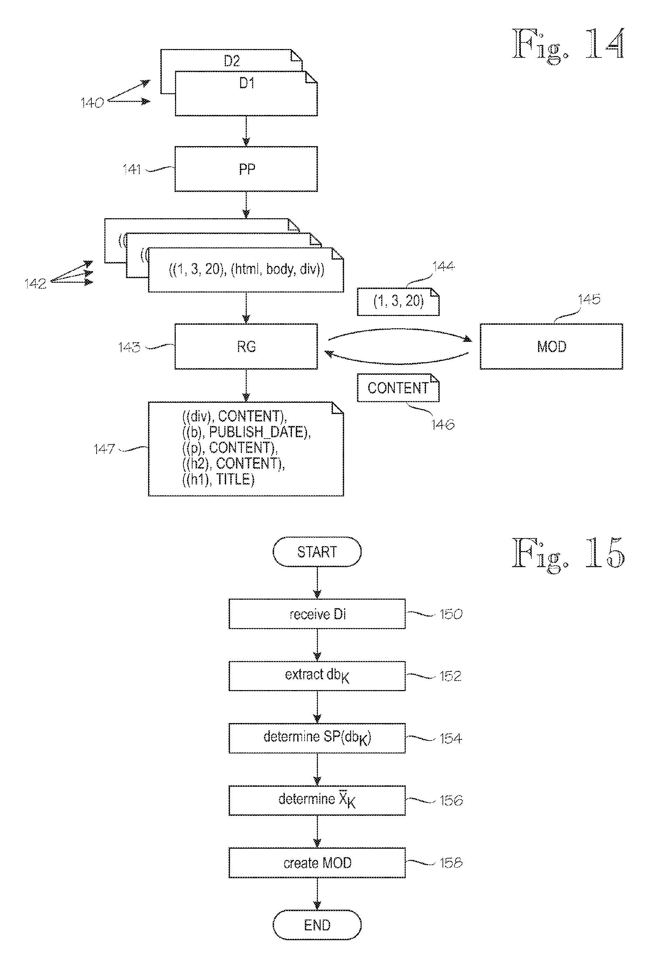

When the model is created, the system is ready to receive a set of training information and to create rules that apply to that type of documents. Figure 14 provides a functional representation of the rule generator during rule induction. One or more training documents 140 are again input to the preprocessor 141 that transforms them into a list 142 of feature vectors and corresponding selector paths. The list 142 is fed to the inducer 143 that maps the combinations 144 of feature vector and corresponding selector path with the earlier trained model 145 to concepts 146. When the inducer 143 has derived the combinations of feature vector, selector path and concept, it determines a minimal set of selectors that apply to instances of a concept in the training data and collects them into a record 147. When all concepts are cleared, the record is output to the ruleset repository.

In view of the present embodiment, let us assume the original training data generated a model that classifies feature vectors that have a font size of 25 points to the concept TITLE, feature vectors that have more than five digits to the concepts PUBLISH_DATE, and any text elements after an element classified as PUBLISH_DATE to the concept CONTENT.

The training documents are blog postings from a particular site. Let us assume the first document is:

```
<html>
    <body>
        <h1> My blog, post 1!</h1>
        <b><h1>(25.01.08)</h1></b>
        <div> I was very happy today </div>
        <div>I ran in the rain. </div>
        <div>But did not get wet. </div>
    </body>
</html>
```

and the second document is:

```
<html>
    <body>
        <h1> Not so happy anymore</h1>
        <b><h1>(26.01.08)</h1></b>
<p>
        <div>Yesterday went fine </div>
        <div>but today I'm depressed.. </div>
</p>
        <div>Hope tomorrow all </div>
        <div>is good again.</div>
    </body>
</html>
```

When these documents are preprocessed, we end up with a list of text elements

| | Text element | Selector path | Features | Concept |
|---|---|---|---|---|
| $t_{1,1}$ | "My blog..." | (html,body,h1) | (0,0,30) | TITLE |
| $t_{1,2}$ | "(25.01.08)" | (html,body,b,h1) | (1,6,16) | PUBLISH_DATE |
| $t_{1,3}$ | "I was very...." | (html,body,div) | (0,0,16) | CONTENT |
| $t_{1,4}$ | "I ran in... | (html,body,div) | (0,0,16) | CONTENT |
| $t_{1,5}$ | "But did not..." | (html,body,div) | (0,0,16) | CONTENT |
| $t_{2,1}$ | "Not so..." | (html,body,h1) | (0,0,30) | TITLE |
| $t_{2,2}$ | "(26.01.08)" | (html,body,b,h1) | (0,6,16) | PUBLISH_DATE |
| $t_{2,3}$ | "Yesterday went..." | (html,body,p, div) | (0,0,16) | CONTENT |
| $t_{2,4}$ | "but today..." | (html,body,p, div) | (0,0,16) | CONTENT |
| $t_{2,5}$ | "Hope..." | (html,body,div) | (0,0,16) | CONTENT |
| $t_{2,6}$ | "is good..." | (html,body,div) | (0,0,16) | CONTENT |

where the concept is a prediction made with the earlier trained model. The inducer collects all records (selector/feature vector combinations) that have the same concept into separate containers and sorts the combinations in the order of increasing specificity within the containers. Accordingly, we end up in a list:

| | Text element | Selector path | Features | Concept |
|---|---|---|---|---|
| $t_{1,3}$ | "I was very...." | (html,body,div) | (0,0,16) | CONTENT |
| $t_{1,4}$ | "I ran in..." | (html,body,div) | (0,0,16) | CONTENT |
| $t_{1,5}$ | "But did not..." | (html,body,div) | (0,0,16) | CONTENT |
| $t_{2,3}$ | "Hope..." | (html,body,div) | (0,0,16) | CONTENT |
| $t_{2,4}$ | "is good..." | (html,body,div) | (0,0,16) | CONTENT |
| $t_{2,5}$ | "Yesterday went..." | (html,body,p, div) | (0,0,16) | CONTENT |
| $t_{2,6}$ | "but today..." | (html,body,p, div) | (0,0,16) | CONTENT |

The inducer the selects the last element of the least specific selector and ends up with a selector path (div). It checks whether any misclassifications are generated by a rule applying (div). In the exemplary case the selector path (div) matches to all the CONTENT elements. It does not match with any TITLE or PUBLISH_DATE elements. Accordingly, no misclassifications are generated and the inducer may store a rule (div)→CONTENT. The remaining text elements are then:

| | Text element | Selector path | Features | Concept |
|---|---|---|---|---|
| $t_{1,1}$ | "My blog..." | (html,body,h1) | (0,0,30) | TITLE |
| $t_{1,2}$ | "(25.01.08)" | (html,body,b,h1) | (1,6,16) | PUBLISH_DATE |
| $t_{2,1}$ | "Not so..." | (html,body,h1) | (0,0,30) | TITLE |
| $t_{2,2}$ | "(26.01.08)" | (html,body,b,h1) | (0,6,16) | PUBLISH_DATE |

If the inducer now picks the concept PUBLISH_DATE and orders them according to selector specificity to

| | Text element | Selector path | Features | Concept |
|---|---|---|---|---|
| $t_{1,2}$ | "(25.01.08)" | (html,body,b,h1) | (1,6,16) | PUBLISH_DATE |
| $t_{2,2}$ | "(26.01.08)" | (html,body,b,h1) | (0,6,16) | PUBLISH_DATE |

The least specific selector is (html,body,b,h1) and its last selector is (h1). h1, however, now matches with all remaining selector paths. Use of (h1) as a rule would thus cause misclassifications and therefore it is not applicable; the selector path needs to be more specific. In this situation, the inducer adds the next selector to the path such that the path becomes (b,h1). Now we see that this path matches only the publish date, so no misclassifications are detected. This means that the inducer may store a rule (b,h1)→PUBLISH_DATE.

At this stage there are only TITLE concepts left. The least specific selector is (html,body,h1) and its last selector is (h1). Use of (h1) at this stage does not cause any misclassifications anymore and the final rule stored is this (h1)→TITLE.

It should be noted that the order of the concepts was here advantageous for rule generation. In case the inducer had chosen TITLE as the first concept, (h1) would have generated misclassifications. Even adding specificity would not have helped, because (html,body,h1) matches with PUBLISH_DATE concept. Such situations may be cleared by dealing first with another concept (PUBLISH_DATE, as before) or by storing the most specific rule (html,body,h1)→TITLE and accept some level of misclassifications. In general, the procedure may be adjusted to count a mismatch value that corresponds with the number or ratio of mismatches, and determine whether to store a rule by comparing the mismatch value to a threshold value.

The stored rules comprise:

(div)→CONTENT

(b,h1)→PUBLISH_DATE

(h1)→TITLE

As may be seen, the rules are in readable format and lend themselves for easy overview by an operator of the system. Automatic processes are prone to noise, and the internet is an ever-changing terrain, and the web sites change their document templates continuously. It is important that even if the training and classification procedures are basically automatic, the operator of the system is able to monitor and iron out possible problems by hand during the use, instead of feeding the system with more and more training data until it runs correctly. For maintainability and noise control, it is a practical must that the generated rules are in human readable format. The ability to version, store, transfer and delete rules may be considered a further benefit from human readability of the rules.

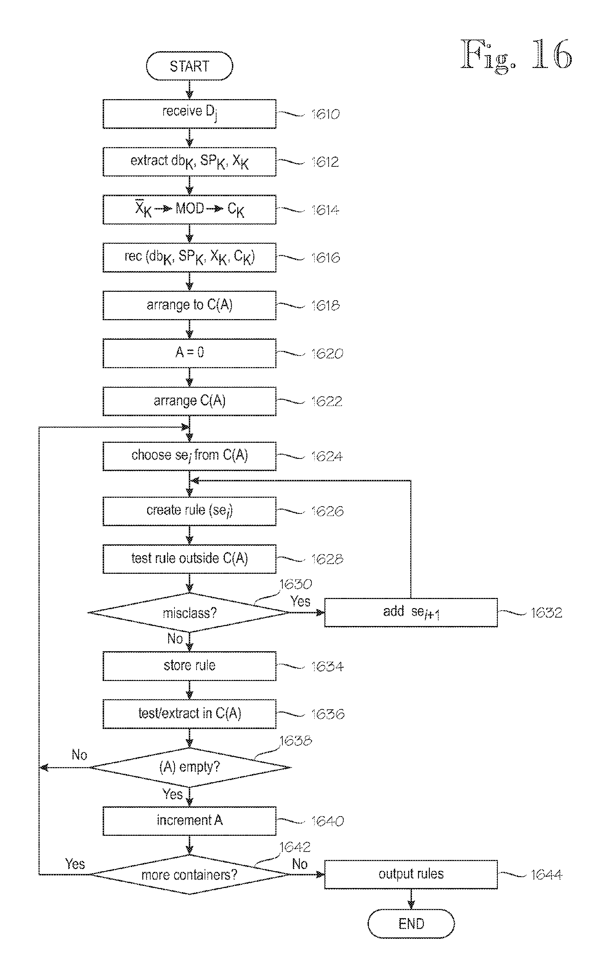

In view of the above, Figures 15 and 16 illustrate steps of a two-staged procedure for generating a ruleset for a specific document context. In the first stage (Figure 15) the rule generator creates with averaged model training material a context-based model. In the second stage (Figure 15) the rule generator creates with rule training material and the context-based model the rules applying in the context of the rule training materials.

In the beginning, the rule generator receives (step 150) a set of one or more model training documents and extracts (step 152) from them the text elements. The rule generator also determines (step 154) the selector paths of the text elements and feature vectors (step 156) of the text elements. On the basis of the material and using a Markov model and Naive Bayes model, the rule generator creates (step 158) a context-based model that maps feature vectors into concepts of the information system where the rule generator is applied. This ends the first stage.

When the model is created, the rule generator receives (step 1610) a new set of rule generation documents and extracts from them text elements, their selector paths and feature vectors (step 1612). The rule generator outputs the feature vectors to the model and receives a corresponding concept (step 1614). The rule generator combines (step 1616) operatively the feature vector, selector path and concept of the text elements into records and arranges (step 1518) the records into separate containers according to the concept of the record. Operative combining in this context means that the separate elements of the record do not necessarily need to be stored as fields of one physical record. However, it must be possible to process them in combination,

The procedure continues by resetting (step 1620) a container counter. The rule opens the container indicated by the counter and arranges (step 1622) the records in the order of increasing specificity so that the least specific is the first. Then the rule generator takes (step 1624) the last selector element $se_i$ in the selector path from the least specific selector in the container and forms (step 1626) a test rule from it. The rule generator tests (step 1628) the test rule with the material to see if any misclassifications occur. If (step 1630) one or more misclassifications occur, the rule generator adds (step 1632) a new selector element from the same least specific selector path and returns to step 1626 to form a test rule with the accumulated selector elements.

Testing of the rule for misclassifications comprises testing whether the rule triggers a match in some other concept. If such triggering occurs, a misclassification is detected. If (step 1630) no misclassifications occur, the rule generator stores (step 1634) the rule and further tests (step 1636) the rule against all other selector paths of the same concept in the present container, and removes all records to which the rule applies. At this point, the rule generator checks (step 1638) whether there are records still left in the container. If there are, the procedure returns to step 1624 to operate further in the present container. Otherwise the rule generator increments (1640) the containers counter and checks (step 1642) whether all containers have already been processed. If the maximum number of containers is met, the recorded rules are output (step 1644) to the ruleset repository and the procedure ends. If there are still containers to check, the procedure moves to step 1624 to operate on the next container.

The extraction procedure lends itself to a wide variety of data such that specific document types may be analyzed with their specific rules. However, the procedure by which the rules are automatically derived is general and applicable to virtually any type of documents.

It will be obvious to a person skilled in the art that, as the technology advances, the inventive concept can be implemented in various ways. The invention and its embodiments are not limited to the examples described above but may vary within the scope of the claims.

**Claims**

1. A device, comprising:

   an interface engine configured to receive a data item of one or more information elements;
   a classification engine configured to extract the data item into data blocks of one or more information elements;
   a rules repository comprising a set of one or more classification rules, a classification rule provides a mapping to an indication on a functional purpose of the data block in the data item;
   the classification engine being configured to determine a functional purpose of a data block, record information on the determined functional purpose of the data block and send the recorded information to a database;

   **characterized in that**
   the data item comprises or is linked to markup tags that define the layout of the data item during output, at least part of the markup tags being in pairs of a begin tag and an end tag;
   the classification engine is configured to determine for the data block a selector path that comprises a sequence of markup tags, the sequence of markup tags comprises begin tags that precede the data block and for which the corresponding end tag is not detected before the data block;
   the rule repository comprises a rule that maps the selector path to a functional purpose of the data block.

2. A device according to claim 1, **characterized by**:

   a rule generator configured to generate one or more rules to the rule repository on the basis a set of labelled training documents input to the device.

3. A device according to claim 2, **characterized by** the rule generator comprising a context-based model applied in generation of the rules.

4. A device according to claim 3, **characterized in that** the rule generator is configured to train the context-based model with a set of one or more labelled training documents.

5. A device according to claim 4, **characterized in that** the rule generator comprises a pre-processor configured to generate, on the basis of the data block, a selector path and a feature vector, a feature being a measurable layout feature of the data block, use the context-based model to map the feature vector into a functional purpose of the data block;
   determine the one or more rules on the basis of the combination of the feature vector, selector path, and functional purpose of the data block.

6. A device according to claim 5, **characterized in that** the rule generator is configured to:

   determine from the set of one or more labelled training documents a set of data blocks;
   generate selector paths and feature vectors for the set of data blocks;
   determine with the context-based model functional purposes for the set of data blocks;
   operatively compile a selector path, feature vector and functional purpose of the data block into a record;
   use the record to generate one or more rules for the rules repository.

7. A device according to claim 6, **characterized in that** the rule generator is configured to:

   arrange the records into containers according to the functional purpose element of the record;
   determine the last element of the least specific selector in a container;
   generate a rule applying the determined last element of the least specific selector;
   check from other containers whether the mismatches between the result of applying the rule and the result in the labeled document exist;
determine a mismatch value that corresponds with the number or ratio of mismatches in the other container; and
determine whether to store a rule by comparing the mismatch value to a threshold value.

8. A device according to claim 6, **characterized in that** the threshold value is zero.

9. A device according to claims 4 to 8, **characterized in that** the context-based model is a Markov classifier.

10. A method, comprising:

receiving a data item of one or more information elements;
extracting the data item into data blocks of one or more information elements;
storing a set of one or more classification rules, a classification rule provides a mapping to an indication on a functional purpose of the data block in the data item;
determining a functional purpose of a data block, record information on the determined functional purpose of the data block and send the record to the database;

**characterized by**
including in the data item or linking the data item to markup tags that define the layout of the data item during output, at least part of the markup tags being in pairs of a begin tag and an end tag;
determining for the data block a selector path that comprises a sequence of markup tags, the sequence of markup tags comprises begin tags that precede the data block and for which the corresponding end tag is not detected before the data block;
using a rule to map the selector path to a functional purpose of the data block.

11. A computer program product readable by a computer and encoding a computer program of instructions for executing a computer process for controlling functions in an information system, **characterized by** the process including the steps of the method of claim 10.

Fig. 1

$$DI_i \longrightarrow \boxed{F(DI_i)} \longrightarrow A(DIi)$$

100

Fig. 2

Fig. 3

33

34 32

35 31

Fig. 4

$$DI_i \longrightarrow$$

$$A_j(DIi) \longleftarrow$$

UI 404

400 402

IE CE

408 406

RG RS

# Fig. 5

START

receive $D_{ij}$ — 500

$K = 0$ — 502

determine $db_K$ — 504

determine $SP(db_K)$ — 506

check match — 508

match? — 510

No

Yes

retrieve $C_K$ — 512

augment $db_K + C_K$ — 514

$REC = (db_K + C_K)$ — 516

$K = K+1$ — 518

check $db_K$ — 520

exist? — 522

Yes

No

compile RECs — 524

output RECs — 526

END

Fig. 6

CONTENT

0.7

0.3

NON-CONTENT

0.4    HEADING

0.2

0.7

0.1

0.6    0.2

0.8

DATE

Fig. 7

((0, 1, 30), TITLE),

((0, 1, 30), TITLE),

((0, 1, 30), TITLE),
((1, 8, 16), PUBLISH_DATE),
((0, 1, 16), CONTENT)

73

70

71                    MOD                    72

(1, 3, 20)                              TITLE

Fig. 8

| | X_1 | X_2 | X_3 |
|---|---|---|---|
| TITLE | P: B: | P: B: | P: B: |
| PUBLISH_DATE | P: B: | P: B: | P: B: |
| CONTENT | P: B: | P: B: | P: B: |

Fig. 9

|  | X_1 | X_2 | X_3 |
|---|---|---|---|
| TITLE | P: 0.00313698 B: | P: B: | P: B: |
| PUBLISH_DATE | P: 0.00000001 B: | P: B: | P: B: |
| CONTENT | P: 0.000019404 B: | P: B: | P: B: |

Fig. 10

|  | X_1 | X_2 | X_3 |
|---|---|---|---|
| TITLE | P: 0.00313698 B: | P: $1.035203*10^{-9}$ B: TITLE | P: B: |
| PUBLISH_DATE | P: 0.00000001 B: | P: B: | P: B: |
| CONTENT | P: 0.000019404 B: | P: B: | P: B: |

Fig. 11

|  | X_1 | X_2 | X_3 |
|---|---|---|---|
| TITLE | P: 0.00313698 B: | P: $1.035203*10^{-9}$ B: TITLE | P: B: |
| PUBLISH_DATE | P: 0.00000001 B: | P: $3.043497996*10^{-7}$ B: TITLE | P: B: |
| CONTENT | P: 0.000019404 B: | P: $6.1484808*10^{-10}$ B: TITLE | P: B: |

Fig. 12

|  | X_1 | X_2 | X_3 |

TITLE
P: 0.00313698
B:

P:1.035203*10$^{-9}$
B:TITLE

P:3.043497996*10$^{-15}$
B: PUBLISH_DATE

PUBLISH_DATE
P: 0.00000001
B:

P:3.043497996*10$^{-7}$
B:TITLE

P: 2.95219*10$^{-13}$
B:PUBLISH_DATE

CONTENT
P:0.000019404
B:

P: 6.1484808*10$^{-10}$
B:TITLE

P: 5.61386*10$^{-8}$
B:PUBLISH_DATE

Fig. 13

|  | X_1 | X_2 | X_3 |

TITLE
P: 0.00313698
B:

PUBLISH_DATE
P:3.043497996*10$^{-7}$
B:TITLE

P: 2.95219*10$^{-13}$
B:PUBLISH_DATE

CONTENT
P: 5.61386*10$^{-8}$
B:PUBLISH_DATE

**Fig. 14**

D2

D1

140

141 — PP

142

((1, 3, 20), (html, body, div))

144

(1, 3, 20)

145

MOD

143 — RG

146 — CONTENT

147

((div), CONTENT),
((b), PUBLISH_DATE),
((p), CONTENT),
((h2), CONTENT),
((h1), TITLE)

**Fig. 15**

START

receive Di — 150

extract $db_K$ — 152

determine $SP(db_K)$ — 154

determine $\bar{X}_K$ — 156

create MOD — 158

END

Fig. 16

```
                    ┌─────────┐
                    │  START  │
                    └─────────┘
                         │
                    ┌─────────────────┐
                    │   receive Dⱼ     │── 1610
                    └─────────────────┘
                         │
                    ┌─────────────────┐
                    │ extract db_K, SP_K, X_K │── 1612
                    └─────────────────┘
                         │
                    ┌─────────────────┐
                    │ X̄_K → MOD → C_K │── 1614
                    └─────────────────┘
                         │
                    ┌─────────────────┐
                    │ rec (db_K, SP_K, X_K, C_K) │── 1616
                    └─────────────────┘
                         │
                    ┌─────────────────┐
                    │  arrange to C(A) │── 1618
                    └─────────────────┘
                         │
                    ┌─────────────────┐
                    │     A = 0       │── 1620
                    └─────────────────┘
                         │
                    ┌─────────────────┐
                    │  arrange C(A)   │── 1622
                    └─────────────────┘
                         │
                    ┌─────────────────┐
                    │ choose se_i from C(A) │── 1624
                    └─────────────────┘
                         │
                    ┌─────────────────┐
                    │  create rule (se_i) │── 1626
                    └─────────────────┘
                         │
                    ┌─────────────────┐
                    │ test rule outside C(A) │── 1628
                    └─────────────────┘
                         │
                    1630
                    ◇ misclass? ◇ ── Yes ──→ ┌──────────┐
                         │                    │ add se_{i+1} │── 1632
                        No                    └──────────┘
                         │
                    ┌─────────────────┐
                    │   store rule    │── 1634
                    └─────────────────┘
                         │
                    ┌─────────────────┐
                    │ test/extract in C(A) │── 1636
                    └─────────────────┘
                         │
                    1638
        No ←── ◇ (A) empty? ◇
                         │
                        Yes
                         │
                    ┌─────────────────┐
                    │  increment A    │── 1640
                    └─────────────────┘
                         │
                    1642
   Yes ←── ◇ more containers? ◇ ── No ──→ ┌──────────┐
                                           │ output rules │── 1644
                                           └──────────┘
                                                │
                                           ┌─────────┐
                                           │   END   │
                                           └─────────┘
```